(19) Europäisches Patentamt
European Patent Office
Office européen des brevets

(11) **EP 4 579 534 A1**

(12) **EUROPEAN PATENT APPLICATION**

(43) Date of publication:
**02.07.2025 Bulletin 2025/27**

(21) Application number: **24220485.7**

(22) Date of filing: **17.12.2024**

(51) International Patent Classification (IPC):
**G06N 3/096** (2023.01) **G06N 3/084** (2023.01)
**G06N 3/045** (2023.01)

(52) Cooperative Patent Classification (CPC):
**G06N 3/045; G06N 3/084; G06N 3/096**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 CN 202311842800**

(71) Applicant: **BEIJING YOUZHUJU NETWORK
TECHNOLOGY CO. LTD.
Beijing 101299 (CN)**

(72) Inventor: **GUO, Ruoyu
Beijing, 100028 (CN)**

(74) Representative: **Dentons UK and Middle East LLP
One Fleet Place
London EC4M 7WS (GB)**

(54) **MODEL TRAINING METHOD, MEDIUM AND ELECTRONIC DEVICE**

(57) The present disclosure relates to a model training method, a medium and an electronic device, and relates to the field of computer technology. The method includes: inputting a training sample carrying a ground-truth label into a student model and a teacher model, and obtaining the first prediction result output by the student model and the second prediction result output by the teacher model; determining the first loss between the first prediction result and the ground-truth label, and determining the second loss between the first prediction result and the second prediction result; determining a total loss function according to the first loss, the second loss and an adaptive parameter; and adjusting a parameter of the student model based on the total loss function to obtain a trained student model. According to the gradient of the teacher model, the impact of the second loss on the total loss function can be dynamically adjusted, so as to dynamically adjust the gradient impact of the second loss on the parameter weight of the student model, which makes the training of the student model maintain stability and consistency, thereby maximizing the accuracy of the student model.

Determining the first gradient descent amplitude corresponding to the student model according to the first gradient value of the student model — 201

Determining the second gradient descent amplitude corresponding to the teacher model according to the second gradient value of the teacher model — 202

Determining the adaptive parameter according to the first gradient descent amplitude and the second gradient descent amplitude — 203

Fig. 2

Processed by Luminess, 75001 PARIS (FR)

**Description**

TECHNICAL FIELD

The present disclosure relates to a model training method, a medium and an electronic device.

BACKGROUND

In a deep learning task, a model with a large parameter quantity often has high precision but a slow prediction speed, and occupies a large amount of memory. A model with a small parameter quantity often has a fast prediction speed and small memory occupation but low precision. Generally, a high-precision teacher model can be used to guide a low-precision student model for distillation training, so that the precision of the student model is improved while the prediction speed of the student model is ensured. Therefore, in distillation training, how to ensure the distillation effect becomes a technical problem that needs to be solved urgently in the art.

SUMMARY

The summary is provided to introduce concepts in a simplified form, which will be described in detail in the following detailed embodiments. The summary is not intended to identify key features or necessary features of the claimed technical solutions, nor is it intended to be used to limit the scope of the claimed technical solutions.

The present disclosure provides a model training method, and the method includes: inputting a training sample carrying a ground-truth label into a student model and a teacher model, and obtaining a first prediction result output by the student model and a second prediction result output by the teacher model, in which the training sample includes one selected from the group consisting of an image sample, a text sample and a sound sample; determining a first loss between the first prediction result and the ground-truth label, and determining a second loss between the first prediction result and the second prediction result; determining a total loss function according to the first loss, the second loss and an adaptive parameter, in which the adaptive parameter is related to a gradient of the teacher model, and the adaptive parameter is used to dynamically adjust an amplitude of the second loss; and adjusting a parameter of the student model based on the total loss function to obtain a trained student model.

The present disclosure provides a model training apparatus, and the apparatus includes an obtaining module, a first determining module, a second determining module and a training module. The obtaining module is configured to input a training sample carrying a ground-truth label into a student model and a teacher model, and obtain a first prediction result output by the student model and a second prediction result output by the teacher model, in which the training sample includes one selected from the group consisting of an image sample, a text sample and a sound sample. The first determining module is configured to determine a first loss between the first prediction result and the ground-truth label, and determine a second loss between the first prediction result and the second prediction result. The second determining module is configured to determine a total loss function according to the first loss, the second loss and an adaptive parameter, in which the adaptive parameter is related to a gradient of the teacher model, and the adaptive parameter is used to dynamically adjust an amplitude of the second loss. The training module is configured to adjust a parameter of the student model based on the total loss function to obtain a trained student model.

The present disclosure provides a computer-readable medium, which stores a computer program, and when the computer program is executed by a processor, the processor implements the above model training method.

The present disclosure provides an electronic device, which includes a memory and a processor. The memory stores a computer program; and the processor is configured to execute the computer program in the memory to implement the above model training method.

BRIEF DESCRIPTION OF DRAWINGS

The above and other features, advantages, and aspects of the embodiments of the present disclosure will become more apparent with reference to the following specific embodiments and in conjunction with the accompanying drawings. Throughout the drawings, the same or similar reference numerals denote the same or similar elements. It should be understood that the accompanying drawings are schematic and that parts and elements are not necessarily drawn to scale.

Fig. 1 is a flowchart of a model training method according to some embodiments.
Fig. 2 is a flowchart of determining an adaptive parameter according to some embodiments.
Fig. 3 is a flowchart of determining an adaptive parameter according to some other embodiments.
Fig. 4 is a structural schematic diagram of a model training apparatus according to some embodiments.
Fig. 5 is a structural schematic diagram of an electronic device according to some embodiments.

DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for illustrative purposes, and are not intended to limit the scope of protection of the present disclosure.

It should be understood that the various steps described in the method implementations of the present disclosure may be performed in different orders, and/or performed in parallel. Further, additional steps may be included and/or the execution of the illustrated steps may be omitted in the method implementations. The scope of the present disclosure is not limited in this respect.

The terms "include/comprise" used herein and the variations thereof are an open-ended inclusion, that is, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of other terms will be given in the description below.

It should be noted that the concepts of "first" and "second" mentioned in the present disclosure are only used to distinguish different apparatuses, modules, or units, and are not used to limit the sequence or interdependence of functions performed by these apparatuses, modules, or units.

It should be noted that the modifiers "one" and "a plurality of' mentioned in the present disclosure are illustrative and not restrictive, and those skilled in the art should understand that unless the context clearly indicates otherwise, the modifiers should be understood as "one or more".

Names of messages or information exchanged between a plurality of apparatuses in the implementations of the present disclosure are used for illustrative purposes only, and are not used to limit the scope of these messages or information.

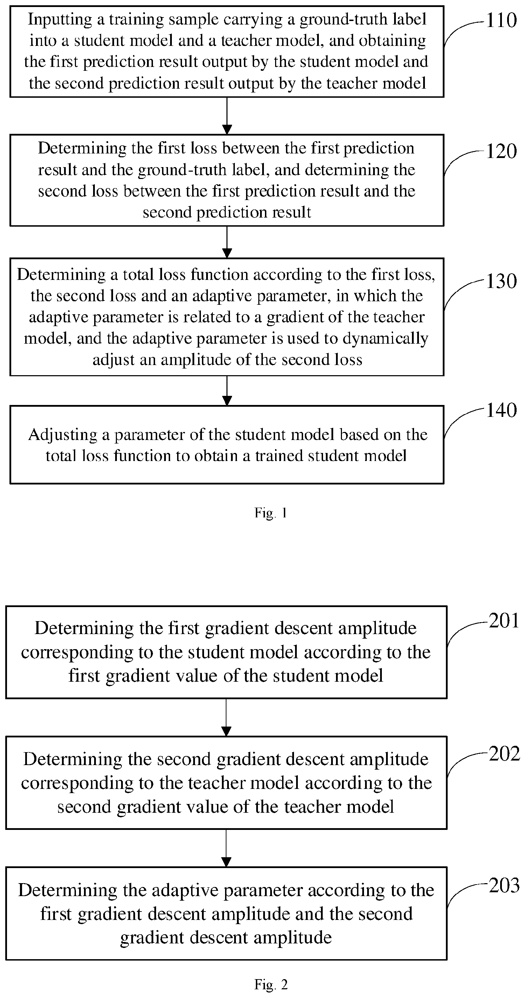

Fig. 1 is a flowchart of a model training method according to some embodiments. As shown in Fig. 1, the embodiments of the present disclosure provide a model training method, which may be executed by an electronic device, and specifically may be executed by a model training apparatus. The apparatus may be implemented in a software and/or hardware manner and is configured in the electronic device. As shown in Fig. 1, the method may include the following steps.

In step 110: inputting a training sample carrying a ground-truth label into a student model and a teacher model, and obtaining the first prediction result output by the student model and the second prediction result output by the teacher model.

Here, the ground-truth label may refer to a correct output or category of an instance in the training sample, and may also be referred to as a target variable or a response variable. For example, in image classification, a ground-truth label in an image sample may refer to a category of an item in an image, such as a cat, a dog, and the like. It should be understood that the ground-truth label in the training sample may be manually labeled, or may be labeled by using other automatic labeling models.

In the embodiments of the present disclosure, the training sample includes one selected from the group consisting of an image sample, a text sample and a sound sample. For example, when a model of an image category is trained, the training sample may be an image sample. When a model of an acoustic category is trained, the training sample may be a sound sample. When a model of a text category is trained, the training sample may be a text sample.

In other words, the model training method provided in the embodiments of the present disclosure may be applicable to any type of machine learning model, such as a machine learning model of an image type, a machine learning model of a text type, a machine learning model of a sound type, and the like. It should be noted that in the embodiments of the present disclosure, the machine learning model may be a neural network model, or may be a non-neural network model other than the neural network model, such as a decision tree.

The teacher model may be a pre-trained large model, and the student model may be a lightweight small model after being compressed. In knowledge distillation, the teacher model is an exporter of knowledge and provides the knowledge to the student model. The student model is a receiver of the knowledge and obtains the knowledge from the teacher model.

The electronic device inputs the training sample into the student model and the teacher model respectively, to obtain the first prediction result output by the student model and the second prediction result output by the teacher model. The first prediction result is a prediction result obtained by the student model based on feature recognition in the training sample, and the second prediction result is a prediction result obtained by the teacher model based on feature recognition in the training sample.

In step 120: determining the first loss between the first prediction result and the ground-truth label, and determining the second loss between the first prediction result and the second prediction result.

Here, the first loss between the first prediction result and the ground-truth label may be calculated based on the first loss function, and the second loss between the first prediction result and the second prediction result may be calculated based on the second loss function.

It should be noted that the first loss function and the second loss function may be one selected from the group consisting of L1-Loss function (Mean Absolute Error, MAE, absolute value loss function) and L2-Loss function (Mean Squared Error, MSE, square loss function). Certainly, the first loss function and the second loss function may also be other loss functions, such as a cross entropy loss function, a maximum likelihood loss function (NLL Loss), and the like.

It should be understood that the first loss actually refers to a ground-truth loss between an output result of the student model and the ground-truth label of the training sample, and the second loss actually refers to a distillation loss between an output of the student model and an output of the teacher model.

In step 130: determining a total loss function according to the first loss, the second loss and an adaptive parameter, in which the adaptive parameter is related to a gradient of the teacher model, and the adaptive parameter is used to dynamically adjust an amplitude of the second loss.

Here, the total loss function may include two parts, the first loss and the second loss. In other words, the total loss function may be composed of the first loss and the weighted second loss, and the adaptive parameter is used as a weighting coefficient of the second loss.

It should be noted that in each training process, the value of the adaptive parameter also varies due to different gradients of the teacher model. In other words, the magnitude of the adaptive parameter is related to the gradient of the teacher model in this training process.

During the training process of the model, after forward propagation, the parameters of the model need to be adjusted by using the prediction result of the model, that is, back propagation. In the back propagation process, a loss value may be allocated by using a weight of each link of the model. The gradient refers to a direction in which a total loss function drops fastest. In the model update process, a direction in which the total loss function drops fastest is generally found and multiplied by a set learning step, and the learning step is added to or subtracted from an old model to obtain an updated model.

It should be understood that the gradient is actually a vector representing a direction, and has the same shape as the total loss function. An element at each position in the gradient represents a change rate of an element at a corresponding position of the total loss function relative to a weight. Therefore, the magnitude of the gradient actually represents a speed of model iteration. The larger the gradient, the faster the model iteration speed, but the model is also prone to oscillation during the learning process.

In some embodiments, the gradient of each layer in the model may be calculated by using a chain rule.

It should be noted that the adaptive parameter is actually used to adjust the second loss corresponding to the teacher model based on the gradient of the teacher model. During the training process, when the impact of the second loss on the gradient of the weight of the student model is small, the adaptive parameter increases the impact of the second loss on the student model. When the impact of the second loss on the gradient of the weight of the student model is large, the adaptive parameter reduces the impact of the second loss on the student model. Through the adaptive parameter, the impact of the amplitude of the gradient of the second loss (distillation loss) on the student model can be dynamically adjusted.

In step 140: adjusting a parameter of the student model based on the total loss function to obtain a trained student model.

Here, a corresponding total loss value may be calculated by using the total loss function, and the parameter of the student model is adjusted by back propagation based on the total loss value, so that the adjusted student model can meet a preset training condition, and the trained student model is obtained.

It should be noted that in the embodiments of the present disclosure, the student model may be continuously trained by using a given training sample set, so that a total loss value calculated based on the total loss function can reach an optimal solution, that is, the training of the student model is completed. The training sample set includes a plurality of training samples.

It should be understood that the trained student model may be used for model inference and deployment. In other words, the trained student model may be used directly.

Therefore, the training sample carrying the ground-truth label is input into the student model and the teacher model, to obtain the first prediction result output by the student model and the second prediction result output by the teacher model. The first loss between the first prediction result and the ground-truth label is determined, and the second loss between the first prediction result and the second prediction result is determined. The total loss function is determined based on the first loss, the second loss and the adaptive parameter. The parameter of the student model is adjusted based on the total loss function to obtain a trained student model. According to the gradient of the teacher model, the impact of the second loss on the total loss function can be dynamically adjusted, so as to dynamically adjust the gradient impact of the second loss on the parameter weight of the student model, which makes the training of the student model maintain stability and consistency, thereby maximizing the accuracy of the student model.

In some implementable implementations, the adaptive parameter may be determined according to the first gradient value of the student model and the second gradient value of the teacher model.

Here, the first gradient value and the second gradient value may refer to gradient values corresponding to layers in the student model and the teacher model. The gradient refers to a vector composed of partial derivatives of a function to each parameter. Therefore, both the first gradient value of the student model and the second gradient value of the teacher model may be calculated by using a chain rule. The chain rule refers to a composite function formed by combining two functions. A derivative is equal to the derivative of the outer function with the inner function substituted into it, multiplied by the derivative of the inner function.

It should be noted that the adaptive parameter may be related to the first gradient value of the student model and the second gradient value of the teacher model. In other words, the adaptive parameter may be calculated according to the first gradient value relative to the second gradient value of the teacher model. For example, the adaptive parameter may be calculated according to a ratio of the first gradient value to the second gradient value.

Fig. 2 is a flowchart of determining an adaptive parameter according to some embodiments. As shown in Fig. 2, in some embodiments, the adaptive parameter may be determined by the following steps.

In step 201: determining the first gradient descent amplitude corresponding to the student model according to the first gradient value of the student model.

Here, the first gradient descent amplitude is used to indicate a speed of gradient descent of each layer in the student model. A larger first gradient descent amplitude, indicates a greater change in the gradient of the weight parameter brought to the student model by the first loss. A smaller first gradient descent amplitude, indicates a smaller change in the gradient of the weight parameter brought to the student model by the first loss.

For example, the first gradient value may include the first maximum gradient value and the first minimum gradient value of the student model.

For example, the gradients of the layers in the student model are 0.2, 0.4, 0.6 and 0.8 respectively, then 0.8 is the first maximum gradient value of the student model, and 0.2 is the first minimum gradient value of the student model.

In some embodiments, the first gradient descent amplitude may be determined according to the first difference between the first maximum gradient value and the first minimum gradient value.

For example, the first gradient descent amplitude may be calculated according to the first calculation formula, where the first calculation formula is:

$$H_{gt} = max(grad_{gt}) - min(grad_{gt})$$

where $H_{gt}$ is the first gradient descent amplitude, $max(grad_{gt})$ is the first maximum gradient value, and $min(grad_{gt})$ is the first minimum gradient value.

In step 202: determining the second gradient descent amplitude corresponding to the teacher model according to the second gradient value of the teacher model.

Here, the second gradient descent amplitude is used to indicate a speed of gradient descent of each layer in the teacher model. A larger second gradient descent amplitude, indicates a greater change in the gradient of the weight parameter brought to the student model by the second loss. A smaller second gradient descent amplitude, indicates a smaller change in the gradient of the weight parameter brought to the student model by the second loss.

For example, the second gradient value may include the second maximum gradient value and the second minimum gradient value of the teacher model.

For example, the gradients of the layers in the teacher model are 0.3, 0.6, 0.9 and 1.2 respectively, then 1.2 is the second maximum gradient value of the teacher model, and 0.3 is the second minimum gradient value of the teacher model.

In some embodiments, the second gradient descent amplitude may be determined according to the second difference between the second maximum gradient value and the second minimum gradient value.

For example, the second gradient descent amplitude may be calculated according to the second calculation formula, where the second calculation formula is:

$$H_{dist} = max(grad_{dist}) - min(grad_{dist})$$

where $H_{dist}$ is the second gradient descent amplitude, $max(grad_{dist})$ is the second maximum gradient value, and $min(grad_{dist}$ is the second minimum gradient value.

In step 203: determining the adaptive parameter according to the first gradient descent amplitude and the second gradient descent amplitude.

Here, after the first gradient descent amplitude and the second gradient descent amplitude are calculated, the adaptive parameter may be determined according to a ratio of the first gradient descent amplitude to the second gradient descent amplitude.

For example, the adaptive parameter may be calculated according to the third calculation formula, where the third calculation formula is:

$$f(grad) = \frac{max(grad_{gt}) - min(grad_{gt})}{max(grad_{dist}) - min(grad_{dist})},$$

where $f(grad)$ is the adaptive parameter.

It should be noted that, as shown in the above third calculation formula, when the impact of the second loss on the gradient of the weight of the student model becomes small (equivalent to $H_{dist}$ becoming small), the adaptive parameter increases, and a weight of the second loss in the total loss function increases. When the impact of the second loss on the gradient of the weight of the student model becomes large (equivalent to $H_{dist}$ becoming large), the adaptive parameter decreases, and a weight of the second loss in the total loss function decreases. Therefore, the stability and consistency of the training of the student model can be maintained through the adaptive parameter.

Generally, in the distillation process, the second loss drops faster than the first loss. Therefore, the second loss almost has no effect in the middle and later stages of the training of the student model. However, through the adaptive parameter, the second loss can be dynamically adjusted to maintain the stability and consistency of the training of the student model.

Therefore, through the above implementation, it can be ensured that the second loss can play the same role in each iteration process of the student model, thereby ensuring the stability and consistency of the training of the student model and greatly improving the effect of the distillation training.

In some implementable implementations, the total loss function may be determined based on the first loss and a product of the second loss and the adaptive parameter.

Here, the total loss function may be constructed by using the fourth calculation formula, where the fourth calculation formula is:

$$L_{all} = L_{gt} + f(grad) * L_{dist}$$

where $L_{all}$ is the total loss function, $L_{gt}$ is the first loss, $L_{dist}$ is the second loss, and $f(grad)$ is the adaptive parameter.

It should be noted that, as shown in the fourth calculation formula, in each training process, an impact of the second loss $L_{dist}$ on the total loss function is adjusted by the adaptive parameter $f(grad)$, so that the impact of the first loss $L_{gt}$ and the impact of the second loss $L_{dist}$ on the student model are the same.

Therefore, through the above total loss function, the value of the second loss can be dynamically adjusted in each training process, thereby ensuring the stability and consistency of the training of the student model.

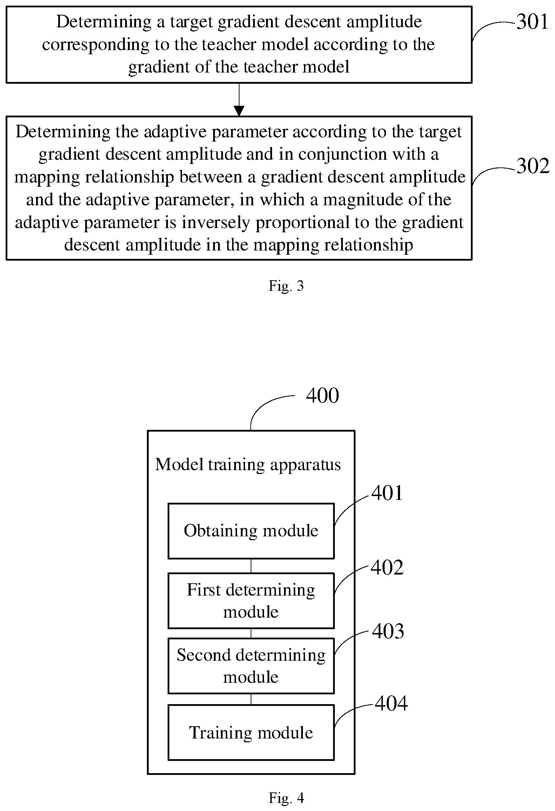

Fig. 3 is a flowchart of determining an adaptive parameter according to some other embodiments. As shown in Fig. 3, in some implementable implementations, the adaptive parameter may be determined by the following steps.

In step 301: determining a target gradient descent amplitude corresponding to the teacher model according to the gradient of the teacher model.

Here, the gradient of the teacher model may refer to a gradient value of each layer of the teacher model, and the target gradient descent amplitude may refer to the above second gradient descent amplitude. In other words, the target gradient descent amplitude may be determined according to the second difference between the second maximum gradient value and the second minimum gradient value.

In step 302: determining the adaptive parameter according to the target gradient descent amplitude and in conjunction with a mapping relationship between a gradient descent amplitude and the adaptive parameter, in which a magnitude of the adaptive parameter is inversely proportional to the gradient descent amplitude in the mapping relationship.

Here, after the target gradient descent amplitude is determined, the adaptive parameter corresponding to the target gradient descent amplitude is found in a pre-established mapping relationship based on the target gradient descent amplitude.

In the pre-established mapping relationship, the magnitude of the adaptive parameter is inversely proportional to the gradient descent amplitude. In other words, the larger the value of the target gradient descent amplitude, the smaller the adaptive parameter. The smaller the value of the target gradient descent amplitude, the larger the adaptive parameter.

It should be understood that in the pre-established mapping relationship, different adaptive parameters may be set for different gradient descent amplitudes. When the corresponding adaptive parameter cannot be found in the mapping relationship according to the target gradient descent amplitude, the corresponding adaptive parameter may be calculated by interpolation.

It should be noted that the larger the target gradient descent amplitude, the greater the impact of the second loss on the gradient of the weight parameter of the student model, and the smaller the adaptive parameter, so that the impact of the second loss on the gradient of the weight parameter of the student model is reduced, which maintains the stability of the training of the student model and avoids large oscillation of the training of the student model. The smaller the target gradient descent amplitude, the smaller the impact of the second loss on the gradient of the weight parameter of the student model, and the larger the adaptive parameter, so that the impact of the second loss on the gradient of the weight parameter of the student model is increased, which maintains the stability of the training of the student model and avoids large oscillation of the training of the student model.

Therefore, the adaptive parameter is determined through the above implementation, so that the corresponding adaptive parameter can be quickly determined, and it ensures that the second loss can play the same role in each iteration process of the student model, thereby ensuring the stability and consistency of the training of the student model and greatly improving the effect of the distillation training.

Fig. 4 is a structural schematic diagram of a model training apparatus according to some embodiments. As shown in Fig. 4, the embodiment of the present disclosure provides a model training apparatus 400. The model training apparatus 400 may include an obtaining module 401, a first determining module 402, a second determining module 403 and a training module 404.

The obtaining module 401 is configured to input a training sample carrying a ground-truth label into a student model and a teacher model, and obtain a first prediction result output by the student model and a second prediction result output by the teacher model, in which the training sample includes one selected from the group consisting of an image sample, a text sample and a sound sample.

The first determining module 402 is configured to determine a first loss between the first prediction result and the ground-truth label, and determine a second loss between the first prediction result and the second prediction result.

The second determining module 403 is configured to determine a total loss function according to the first loss, the second loss and an adaptive parameter, in which the adaptive parameter is related to a gradient of the teacher model, and the adaptive parameter is used to dynamically adjust an amplitude of the second loss.

The training module 404 is configured to adjust a parameter of the student model based on the total loss function to obtain a trained student model.

Optionally, the model training apparatus 400 further includes a first parameter determining module.

The first parameter determining module is configured to determine the adaptive parameter according to a first gradient value of the student model and a second gradient value of the teacher model.

Optionally, the first parameter determining module includes a first determining unit, a second determining unit and a third determining unit.

The first determining unit is configured to determine a first gradient descent amplitude corresponding to the student model according to the first gradient value of the student model.

The second determining unit is configured to determine a second gradient descent amplitude corresponding to the teacher model according to the second gradient value of the teacher model.

The third determining unit is configured to determine the adaptive parameter according to the first gradient descent amplitude and the second gradient descent amplitude.

Optionally, the first gradient value includes a first maximum gradient value and a first minimum gradient value of the student model, and the first determining unit is specifically configured to determine the first gradient descent amplitude according to a first difference between the first maximum gradient value and the first minimum gradient value; the second gradient value includes a second maximum gradient value and a second minimum gradient value of the teacher model, and the second determining unit is specifically configured to determine the second gradient descent amplitude according to a second difference between the second maximum gradient value and the second minimum gradient value.

Optionally, the third determining unit is specifically configured to determine the adaptive parameter according to a ratio of the first gradient descent amplitude to the second gradient descent amplitude.

Optionally, the second determining module 403 is specifically configured to determine the total loss function based on the first loss and a product of the second loss and the adaptive parameter.

Optionally, the model training apparatus 400 further includes a second parameter determining module and a third parameter determining module.

The second parameter determining module is configured to determine a target gradient descent amplitude corresponding to the teacher model according to a gradient of the teacher model.

The third parameter determining module is configured to determine the adaptive parameter based on the target gradient descent amplitude and a mapping relationship between a gradient descent amplitude and an adaptive parameter, in which a magnitude of the adaptive parameter is inversely proportional to the gradient descent amplitude in the mapping relationship.

The logic of the functions executed by each functional module in the above model training apparatus 400 has been described in detail in the part about the method, and is not described herein again.

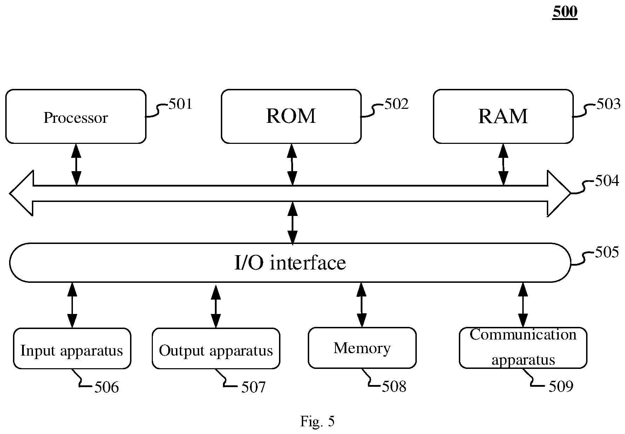

Reference is made to Fig. 5 below, which is a schematic diagram of a structure of an electronic device (for example, a terminal device or a server) 500 suitable for implementing the embodiments of the present disclosure. The terminal device in this embodiment of the present disclosure may include but is not limited to a mobile terminal such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and a fixed terminal such as a digital TV and a desktop computer. The electronic device shown in Fig. 5 is merely an example, and shall not impose any limitation on the function and scope of use of the embodiments of the present disclosure.

As shown in Fig. 5, the electronic device 500 may include a processor (for example, a central processing unit, a graphics processing unit, etc.) 501 that may perform a variety of appropriate actions and processing in accordance with a program stored in a read-only memory (ROM) 502 or a program loaded from a memory 508 into a random access memory (RAM) 503. The RAM 503 further stores various programs and data required for the operation of the electronic device 500. The processor 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 including, for example, a touch screen, a touchpad, a keyboard, a mouse, a camera, a microphone, an accelerometer, and a gyroscope; an output apparatus 507 including, for example, a liquid crystal display (LCD), a speaker, and a vibrator; the memory 508 including, for example, a tape and a hard disk; and a communication apparatus 509. The communication apparatus 509 may allow the electronic device 500 to perform wireless or wired communication with other devices to exchange data. Although Fig. 5 shows the electronic device 500 having various apparatuses, it should be understood that it is not required to implement or have all of the shown apparatuses. It may be an alternative to implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded from a network through the communication apparatus 509 and installed, installed from the memory 508, or installed from the ROM 502. When the computer program is executed by the processor 501, the above-mentioned functions defined in the method of the embodiment of the present disclosure are performed.

It should be noted that the above computer-readable medium described in the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof. In the present disclosure, the computer-readable storage medium may be any tangible medium including or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code in the computer-readable medium may be transmitted by any suitable medium, including but not limited to: electric wires, optical cables, radio frequency (RF), and the like, or any suitable combination thereof.

In some implementations, the electronic device may communicate using any currently known or future-developed network protocol such as a HyperText Transfer Protocol (HTTP), and may be connected to digital data communication (for example, a communication network) in any form or medium. Examples of the communication network include a local area network ("LAN"), a wide area network ("WAN"), an internetwork (such as the Internet), a peer-to-peer network (such as an ad hoc peer-to-peer network), and any currently known or future-developed network.

The above computer-readable medium may be included in the above electronic device; or may exist independently without being assembled into the electronic device.

The above computer-readable medium carries one or more programs that, when executed by the electronic device, cause the electronic device to: input a training sample carrying a ground-truth label into a student model and a teacher model to obtain a first prediction result output by the student model and a second prediction result output by the teacher model, in which the training sample includes one selected from the group consisting of an image sample, a text sample and a sound sample; determine a first loss between the first prediction result and the ground-truth label, and determine a second loss between the first prediction result and the second prediction result; determine a total loss function according to the first loss, the second loss and an adaptive parameter, in which the adaptive parameter is related to a gradient of the teacher model, and the adaptive parameter is used to dynamically adjust an amplitude of the second loss; and adjust a parameter of the student model based on the total loss function to obtain the trained student model.

The computer program code for performing the operations in the present disclosure may be written in one or more programming languages or a combination thereof, where the programming languages include but are not limited to an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to the computer of the user over any type of network, including a local area network (LAN) or a wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code includes one or more executable instructions for implementing the specified logical functions. It should also be noted that in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules involved in the embodiments described in the present disclosure may be implemented by means of software, or may be implemented by means of hardware. The name of a module does not constitute a limitation on the module in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may include or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

The above descriptions are only preferred embodiments of the present disclosure and explanations of the applied technical principles. A person skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, a technical solution formed by replacing the above features with technical features with similar functions disclosed in the present disclosure (but not limited to) is also covered within the scope of the present disclosure.

In addition, although various operations are depicted in a specific order, it should be understood as requiring these operations to be performed in the specific order shown or in a sequential order. Under certain circumstances, multitasking and parallel processing may be advantageous. Similarly, although several specific implementation details are included in the above discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of methodological operations, it should be understood that the subject matter defined in the appended claims is not necessarily limited to the specific features or actions described above. In contrast, the specific features and actions described above are merely exemplary forms of implementing the claims. With respect to the apparatus in the above embodiments, the specific manner in which each module performs an operation has been described in detail in the embodiments relating to the method, and will not be detailed herein.

## Claims

1. A model training method, **characterized in** comprising:

   inputting a training sample carrying a ground-truth label into a student model and a teacher model, and obtaining a first prediction result output by the student model and a second prediction result output by the teacher model, wherein the training sample comprises one selected from the group consisting of an image sample, a text sample and a sound sample;
   determining a first loss between the first prediction result and the ground-truth label, and determining a second loss between the first prediction result and the second prediction result;
   determining a total loss function according to the first loss, the second loss and an adaptive parameter, wherein the adaptive parameter is related to a gradient of the teacher model, and the adaptive parameter is used to dynamically adjust an amplitude of the second loss; and
adjusting a parameter of the student model based on the total loss function to obtain a trained student model.

2. The method according to claim 1, wherein the adaptive parameter is determined by:
determining the adaptive parameter according to a first gradient value of the student model and a second gradient value of the teacher model.

3. The method according to claim 2, wherein the determining the adaptive parameter according to a first gradient value of the student model and a second gradient value of the teacher model, comprises:

   determining a first gradient descent amplitude corresponding to the student model according to the first gradient value of the student model;
   determining a second gradient descent amplitude corresponding to the teacher model according to the second gradient value of the teacher model; and
   determining the adaptive parameter according to the first gradient descent amplitude and the second gradient descent amplitude.

4. The method according to claim 3, wherein the first gradient value comprises a first maximum gradient value and a first minimum gradient value of the student model;
the determining a first gradient descent amplitude corresponding to the student model according to the first gradient value of the student model, comprises:

   determining the first gradient descent amplitude according to a first difference between the first maximum gradient value and the first minimum gradient value;
   the second gradient value comprises a second maximum gradient value and a second minimum gradient value of the teacher model; and
   the determining a second gradient descent amplitude corresponding to the teacher model according to the second gradient value of the teacher model comprises:
   determining the second gradient descent amplitude according to a second difference between the second maximum gradient value and the second minimum gradient value.

5. The method according to claim 3 or 4, wherein the determining the adaptive parameter according to the first gradient descent amplitude and the second gradient descent amplitude, comprises:
determining the adaptive parameter according to a ratio of the first gradient descent amplitude to the second gradient descent amplitude.

6. The method according to any one of claims 1-5, wherein the determining a total loss function according to the first loss, the second loss and an adaptive parameter, comprises:
determining the total loss function according to the first loss and a product of the second loss and the adaptive parameter.

7. The method according to claim 1, wherein the adaptive parameter is determined by:

   determining a target gradient descent amplitude corresponding to the teacher model according to the gradient of the teacher model; and
   determining the adaptive parameter according to the target gradient descent amplitude and in conjunction with a mapping relationship between a gradient descent amplitude and the adaptive parameter, wherein a magnitude of the adaptive parameter is inversely proportional to the gradient descent amplitude in the mapping relationship.

8. A computer-readable medium, storing a computer program, **characterized in that** when the computer program is executed by a processor, the processor implements steps of the method according to any one of claims 1 to 7.

9. An electronic device, **characterized in** comprising:

   at least one memory, storing a computer program; and
   at least one processor, configured to execute the computer program in the at least one memory to implement a model training method,
   wherein the method comprises:

      inputting a training sample carrying a ground-truth label into a student model and a teacher model, and obtaining a first prediction result output by the student model and a second prediction result output by the teacher model, wherein the training sample comprises one selected from the group consisting of an image sample, a text sample and a sound sample;
      determining a first loss between the first prediction result and the ground-truth label, and determining a second loss between the first prediction result and the second prediction result;
      determining a total loss function according to the first loss, the second loss and an adaptive parameter, wherein the adaptive parameter is related to a gradient of the teacher model, and the adaptive parameter is used to dynamically adjust an amplitude of the second loss; and

adjusting a parameter of the student model based on the total loss function to obtain a trained student model.

10. The electronic device according to claim 9, wherein the adaptive parameter is determined by:
determining the adaptive parameter according to a first gradient value of the student model and a second gradient value of the teacher model.

11. The electronic device according to claim 10, wherein the determining the adaptive parameter according to a first gradient value of the student model and a second gradient value of the teacher model, comprises:

determining a first gradient descent amplitude corresponding to the student model according to the first gradient value of the student model;
determining a second gradient descent amplitude corresponding to the teacher model according to the second gradient value of the teacher model; and
determining the adaptive parameter according to the first gradient descent amplitude and the second gradient descent amplitude.

12. The electronic device according to claim 11, wherein the first gradient value comprises a first maximum gradient value and a first minimum gradient value of the student model;
the determining a first gradient descent amplitude corresponding to the student model according to the first gradient value of the student model, comprises:

determining the first gradient descent amplitude according to a first difference between the first maximum gradient value and the first minimum gradient value;
the second gradient value comprises a second maximum gradient value and a second minimum gradient value of the teacher model; and
the determining a second gradient descent amplitude corresponding to the teacher model according to the second gradient value of the teacher model comprises:
determining the second gradient descent amplitude according to a second difference between the second maximum gradient value and the second minimum gradient value.

13. The electronic device according to claim 11 or 12, wherein the determining the adaptive parameter according to the first gradient descent amplitude and the second gradient descent amplitude, comprises:
determining the adaptive parameter according to a ratio of the first gradient descent amplitude to the second gradient descent amplitude.

14. The electronic device according to any one of claims 9-13, wherein the determining a total loss function according to the first loss, the second loss and an adaptive parameter, comprises:
determining the total loss function according to the first loss and a product of the second loss and the adaptive parameter.

15. The electronic device according to claim 9, wherein the adaptive parameter is determined by:

determining a target gradient descent amplitude corresponding to the teacher model according to the gradient of the teacher model; and
determining the adaptive parameter according to the target gradient descent amplitude and in conjunction with a mapping relationship between a gradient descent amplitude and the adaptive parameter, wherein a magnitude of the adaptive parameter is inversely proportional to the gradient descent amplitude in the mapping relationship.

Inputting a training sample carrying a ground-truth label into a student model and a teacher model, and obtaining the first prediction result output by the student model and the second prediction result output by the teacher model ─110

Determining the first loss between the first prediction result and the ground-truth label, and determining the second loss between the first prediction result and the second prediction result ─120

Determining a total loss function according to the first loss, the second loss and an adaptive parameter, in which the adaptive parameter is related to a gradient of the teacher model, and the adaptive parameter is used to dynamically adjust an amplitude of the second loss ─130

Adjusting a parameter of the student model based on the total loss function to obtain a trained student model ─140

Fig. 1

Determining the first gradient descent amplitude corresponding to the student model according to the first gradient value of the student model ─201

Determining the second gradient descent amplitude corresponding to the teacher model according to the second gradient value of the teacher model ─202

Determining the adaptive parameter according to the first gradient descent amplitude and the second gradient descent amplitude ─203

Fig. 2

Determining a target gradient descent amplitude corresponding to the teacher model according to the gradient of the teacher model ⌐301

Determining the adaptive parameter according to the target gradient descent amplitude and in conjunction with a mapping relationship between a gradient descent amplitude and the adaptive parameter, in which a magnitude of the adaptive parameter is inversely proportional to the gradient descent amplitude in the mapping relationship ⌐302

Fig. 3

400

Model training apparatus

Obtaining module ⌐401

First determining module ⌐402

Second determining module ⌐403

Training module ⌐404

Fig. 4

**500**

```
  ┌──────────────┐ ⌐501    ┌──────────────┐ ⌐502    ┌──────────────┐ ⌐503
  │  Processor   │         │     ROM      │         │     RAM      │
  └──────────────┘         └──────────────┘         └──────────────┘
```

504

I/O interface ⌐505

| Input apparatus | Output apparatus | Memory | Communication apparatus |

506 507 508 509

Fig. 5

Europäisches
Patentamt

European
Patent Office

Office européen
des brevets

**EUROPEAN SEARCH REPORT**

Application Number

EP 24 22 0485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/343175 A1 (LU PENG [CA] ET AL) 27 October 2022 (2022-10-27) * paragraphs [0061] - [0073], [0093], [0098] - [0104]; figures 4, 8, 10 * ----- | 1-15 | INV. G06N3/096 G06N3/084 G06N3/045 |

TECHNICAL FIELDS
SEARCHED        (IPC)

G06N
G06V

The present search report has been drawn up for all claims

| Place of search | Date of completion of the search | Examiner |
|---|---|---|
| The Hague | 20 May 2025 | Keane, Shane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                     

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 0485

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | Publication date |
|---|---|---|---|
| US 2022343175 A1 | 27-10-2022 | US 2022343175 A1<br>WO 2022217856 A1 | 27-10-2022<br>20-10-2022 |

EPO FORM P0459

For more details about this annex : see Official Journal of the European Patent Office, No. 12/82